# EUROPEAN PATENT SPECIFICATION

(11) **EP 3 999 708 B1**
(45) Date of publication and mention of the grant of the patent: **24.09.2025**
(21) Application number: 19746341.7
(22) Date of filing: 15.07.2019
(51) Int. Cl.: E06B 3/66, E06B 3/677

(54) **MANUFACTURING OF VACUUM INSULATED GLAZING UNIT**
HERSTELLUNG EINER VAKUUMISOLIERTEN VERGLASUNGSEINHEIT
FABRICATION D'UNE UNITÉ DE VITRAGE ISOLÉ SOUS VIDE

(43) Date of publication of application: 25.05.2022
(73) Proprietor: VKR Holding A/S, 2970 Hørsholm (DK); Krisko, Annette Johncock, Prarie du Sac, Wisconsin 53578 (US)
(72) Inventor: ANDERSEN, Soren Vejling, 8660 Skanderborg (DK); JOHNSEN, Simon, 8450 Hammel (DK); KRISKO, Annette Johncock, Prarie du Sac, Wisconsin 53578 (US)
(74) Representative: Zacco Denmark A/S
(86) International application number: PCT/US2019/041799
(87) International publication number: WO 2021/010960

(56) References cited:
- CN-U- 201 793 481
- US-A1- 2005 151 151
- US-B1- 6 478 911

## Description

The present disclosure relates to a method of providing an edge sealing of a vacuum insulated glazing (VIG) unit.

### Background

Vacuum-insulated glass (VIG) units typically include two or more glass sheets, spaced by an array of support structures e.g. pillars distributed between the glass sheets. The glass sheets are sealed with an edge sealing at the periphery to provide an evacuated space (i.e., vacuum) located between the glass sheets. The evacuated space is sealed at a reduced pressure below 1 millibar such as 0.001 millibars or less in order to ensure an insulating effect of the VIG unit. The overall construction provides improved thermal and noise insulating properties compared to ordinary gass filled glass windows. The edge sealing at the periphery of the glass sheets accordingly needs to be tight in order to provide that the desired internal pressure in the void/gap can be maintained for several years. To prevent sagging and contact between adjacent glass sheets, the support structures e.g. pillars can serve as discrete spacers between adjacent glass sheets.

When sealing the periphery to provide an evacuated space (i.e., vacuum) located between the glass sheets, the edge seal material is heated such that it melts to ensure that the edge seal material adhere to the glass sheets. During the melting procedure, gaseous inclusions are normally formed, which causes the edge seal material to expand, and possibly foam as the gaseous inclusions outgas.

There are various known ways of manufacturing VIG units. Among these are the solution disclosed in US 2005/0217319, 9 or CN 201793481 U1, where the two glass sheets are joined by general heating and by locally heating the edge seal material to obtain a molten material. After cooling the edge seal material solidifies whereby the two glass panes are joined. Exhausting air from the space in-between the two glass panes is conducted by way of an evacuation cup. Another method, also described in US 2005/0217319 is to conduct the heating and the local heating of the edge seal material in a vacuum chamber whereby the glass sheets are joined and evacuated in one step. According to this method, however, re-melting of the edge seal material in vacuum causes gases contained therein to vigorously foam wherefore it is necessary to melt the edge seal material slowly over a sufficient time to fully defoam the internal gases. Otherwise, if gases remains in the material, the glass sheets cannot be completely joined.

Another solution is disclosed in US 9,499,428 where an edge seal frit material is pre-heated in a non-vacuum space at temperatures between 175-225 degree Celsius to help reduce the foaming from binder burnouts during the following heating and joining step.

Further methods are described in US 2005/151151 A1, in the field of OLEDs.

However, one or more of the above mentioned solutions provides drawbacks with regard to e.g. manufacturing speed/capacity, end product quality and/or other drawbacks which the present disclosure may help to solve.

### Summary

Disclosed herein is in a **first aspect** is a method of providing an edge sealing in the process of providing a vacuum insulated glass (VIG) unit comprising paired glass sheets separated by support structures maintaining a gap between said paired glass sheets, wherein the method comprises:
- providing a first glass sheet and a second glass sheet,
- heating a glass frit powder material to a softening temperature (T_{frit-powder}) to soften the glass frit powder material,
- applying the heated, softened glass frit powder material at the first glass sheet and/or the second glass sheet, wherein the first glass sheet and the second glass sheet are paired before or after applying the heated, softened glass frit powder material,
- re-heating the applied glass frit powder material by use of at least one heat source;
- evacuating the gap between the paired glass sheets in a vacuum chamber and
- sealing the paired glass sheets to provide the VIG unit.

By using a glass frit powder material and heating it to a softening temperature (T_{frit-powder}) and applying it in this state, the glass frit powder material can be easily applied and may densify to form a dense edge sealing, with limited gaseous inclusions. During the following re-heating, the applied glass frit powder material will not foam, or may only provide a limited foaming, since the glass frit powder material is already dense (and outgassed), which means that the two glass sheets can be completely joined and that the gap located between the two glass sheets can be fully evacuated.

By the above is obtained a glass frit powder material, which can be heated in a re-heating step without foaming, which significantly eases production of VIG units and may help to provide an improved VIG unit. Formation of crystalline glass structures caused by foaming during sealing of the two glass sheets, may also be reduced or even avoided. This provides a stronger sealing between the two glass sheets.

By the above may also be obtained a high quality VIG unit. The edge sealing may be substantially absent of crystalline glass structures caused by foaming during sealing of the two glass sheets and/or it may be more dense. This may help to provide a stronger sealing between the two glass sheets.

The re-heating of the applied glass frit powder material may provide several advantages from e.g. a manufacturing point of view, e.g. in order to provide more freedom in the manufacturing process of the VIG unit and/or it may help to provide a less complex manufacturing solution and/or a solution that may be less sensitive to time delays during manufacturing of the VIG unit.

By glass frit powder material or glass solder powder material is meant a material that is in the form of a powder. That is, the glass frit powder material is used in this method as a powder not a paste or slurry. Hence, the glass frit powder material is not mixed with a liquid, such as water or an organic solvent, to provide a paste or slurry.

By foaming is meant that the edge seal material bubbles beyond its initial surface. The bubbles have sufficiently high surface tension to remain as bubbles whereby the surface area increases due to the large amount of heat emitted from the material. That in turns results in that the edge seal material has a low thermal conductivity. When the gas bubbles are tiny, they are also referred to as porosities. The solubility of gas obeys Henry's law, that is, the amount of a dissolved gas in a liquid is proportional to its partial pressure.

By outgassed is meant that the gaseous inclusion that may be formed during the heating of the edge seal material are allowed to escape the edge seal material. This will normally be seen as a foaming of the edge seal material. If the edge seal material contains any organic substances, these may also decompose and oxidize in the course of melting to form gaseous inclusions, which outgasses.

By gaseous inclusions are meant gasses formed inside the edge seal material during the heating. The gaseous inclusion may be formed due to organic substances contained in the edge seal material, which form gasses when melted.

By support structures are meant, e.g. support pillars, that serves as discrete spacers between adjacent glass panes. The support structures can help to prevent sagging and contact between adjacent glass sheets. The support structures can be integral or adhered to the inner surfaces of the glass sheets. The support structures can also be discrete and held in position by atmospheric pressure on the outer surfaces of the glass sheets. The support structures may have any suitable shape, for example spherical, cylindrical, square, rectangular, rod-like, bead-like, oval, trapezoidal, or the like.

By densifies is meant that the glass frit powder material become dense after possible outgassing of the gaseous inclusions, whereby the gaseous inclusions in the glass frit powder material constitutes a minor amount of the total volume of the glass frit powder material in percent. Hence, the glass frit powder material can be fully or nearly fully densified when the gaseous inclusions in the dense glass frit powder material constitutes a very minor part of the total volume. The glass frit powder material has an initial glass frit powder material density prior to being heated, and a dense glass frit powder material density when the glass frit powder material has densified.

Foaming of the side seal material is normally an unwanted side effect when producing VIG units. In the step of joining by heating the two glass sheets in vacuum, the side seal material is re-melted which can cause gasses in the side seal material to vigorously foam. The gasses remaining in the side seal material during joining of the two glass sheets creates a porous side seal.

The sealing the paired glass sheets to provide the VIG unit comprises that the evacuated gap between the glass sheets is sealed.

### Brief description of the drawings

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example needs not have all the aspects or advantages shown. An aspect or an advantage described in conjunction with a particular example is not necessarily limited to that example and can be practiced in any other examples even if not so illustrated, or if not so explicitly described.
Fig. 1a-1c illustrates an arrangement and method of providing edge sealing material.
Fig. 2 illustrates a flow chart of one embodiment of the method.
Fig. 3 illustrates a flow chart of one embodiment of the method.
Fig. 4 illustrates a flow chart of one embodiment of the method.
Figs. 5-7 illustrates various examples wherein glass sheets have been paired before heated glass material is applied to provide an edge sealing.
Fig. 8 illustrates schematically an example wherein a clamping arrangement provides a compression force.
Fig. 8a illustrates a clamping arrangement according to a further embodiment, for providing a compression force.
Fig. 9 illustrates a VIG unit provided in accordance with one or more embodiments of the present disclosure.
Fig. 10 illustrates a building seen from the outside/exterior, comprising VIG units provided in accordance with one or more embodiments of the present disclosure.

### Detailed description

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

In the drawings, thicknesses of a plurality of layers and areas are illustrated in an enlarged manner for clarity and ease of description thereof. When a layer, area, element, or plate is referred to as being "on" another layer, area, element, or plate, it may be directly on the other layer, area, element, or plate, or intervening layers, areas, elements, or plates may be present therebetween. Conversely, when a layer, area, element, or plate is referred to as being "directly on" another layer, area, element, or plate, there are no intervening layers, areas, elements, or plates therebetween. Further when a layer, area, element, or plate is referred to as being "below" another layer, area, element, or plate, it may be directly below the other layer, area, element, or plate, or intervening layers, areas, elements, or plates may be present therebetween. Conversely, when a layer, area, element, or plate is referred to as being "directly below" another layer, area, element, or plate, there are no intervening layers, areas, elements, or plates therebetween.

The spatially relative terms "lower" or "bottom" and "upper" or "top", "below", "beneath", "less", "above", and the like, may be used herein for ease of description to describe the relationship between one element or component and another element or component as illustrated in the drawings. It will be understood that the spatially relative terms are intended to encompass different orientations of the device in use or operation, in addition to the orientation depicted in the drawings. For example, in the case where a device illustrated in the drawings is turned over, elements described as being on the "lower" side of other elements, or "below" or "beneath" another element would then be oriented on "upper" sides of the other elements, or "above" another element. Accordingly, the illustrative term "below" or "beneath" may include both the "lower" and "upper" orientation positions, depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below, and thus the spatially relative terms may be interpreted differently depending on the orientations described.

Throughout the specification, when an element is referred to as being "connected" to another element, the element is "directly connected" to the other element, or "electrically connected" to the other element with one or more intervening elements interposed therebetween.

The terminology used herein is for the purpose of describing particular examples only and is not intended to be limiting. As used herein, the singular forms "a," "an," and "the" are intended to include the plural forms, including "at least one," unless the content clearly indicates otherwise. "At least one" is not to be construed as limiting "a" or "an." It will be further understood that the terms "comprises," "comprising," "includes" and/or "including," when used in this specification, specify the presence of stated features, integers, steps, operations, elements, and/or components, but do not preclude the presence or addition of one or more other features, integers, steps, operations, elements, components, and/or groups thereof.

It will be understood that, although the terms "first," "second," "third," and the like may be used herein to describe various elements, these elements should not be limited by these terms. These terms are only used to distinguish one element from another element. Thus, "a first element" discussed below could be termed "a second element" or "a third element," and "a second element" and "a third element" may be termed likewise without departing from the teachings herein.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

Exemplary examples are described herein with reference to cross section illustrations that are schematic illustrations of idealized examples, wherein like reference numerals refer to like elements throughout the specification. As such, variations from the shapes of the illustrations as a result, for example, of manufacturing techniques and/or tolerances, are to be expected. Thus, examples described herein should not be construed as limited to the particular shapes of regions as illustrated herein but are to include deviations in shapes that result, for example, from manufacturing. For example, a region illustrated or described as flat may have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims. Some of the parts which are not associated with the description may not be provided in order to specifically describe exemplary examples of the present disclosure.

Disclosed herein is in a **first aspect** is a method of providing an edge sealing in the process of providing a vacuum insulated glass (VIG) unit comprising paired glass sheets separated by support structures maintaining a gap between said paired glass sheets, wherein the method comprises:
- providing a first glass sheet and a second glass sheet,
- heating a glass frit powder material to a softening temperature (T_{frit-powder}) to soften the glass frit powder material,
- applying the heated, softened glass frit powder material at the first glass sheet and/or the second glass sheet, wherein the first glass sheet and the second glass sheet are paired before or after applying the heated, softened glass frit powder material,
- re-heating the applied glass frit powder material by use of at least one heat source;
- evacuating the gap between the paired glass sheets in a vacuum chamber and
- sealing the paired glass sheets to provide the VIG unit.

In one or more examples the first glass sheet and the second glass sheet are paired before applying the heated, softened glass frit powder material. The glass sheets may here e.g. support on and be spaced apart by the support structures placed between the glass sheets.

The edges of the glass sheets may here e.g. in further examples comprise an stepped-edge configuration, or the edges may be substantially flush.

Alternatively, in one or more examples, the first glass sheet and the second glass sheet are paired after applying the heated, softened glass frit powder material. The edge seal material may here be applied on one or both glass sheets and then the glass sheets may be put together with major surfaces of the glass sheets being substantially parallel and facing each other with the support structures placed in between the glass sheets so as to maintain the gap between the glass sheets.

In one or more examples the heating of the glass frit powder material may be conducted by means of one or more heating arrangements For example, in one or more examples a temperature control arrangement may control the viscosity with which the glass frit powder material is applied by controlling a first and/or a second heating arrangement.

Generally, the glass frit powder material's viscosity decrease as the heating temperature rises. Accordingly, rising the temperature of the heated glass frit powder material, this may risk that the glass frit powder material get too soft and end in a floating state where it flattens so it is not able to connect the glass sheets and form a proper edge sealing between opposing glass sheets, and/or that it unintentionally leaves the nozzle outlet, e.g. when moving from one glass sheet to the other. If it on the other side gets too hard due to a too low temperature, this may possibly cause that the glass sheets are e.g. subjected to undesired stresses when evacuating the gap between the glass sheets, and/or that it may be hard to press the glass material through a nozzle or provide a sufficiently steady flow of heated glass material.

In one or more examples a temperature control arrangement may control a heating arrangement so as to keep the temperature variation of the heated, softened glass frit powder material less than ±10°C, e.g. less than ±5°C, such as e.g. less than ±3°C while the heated glass material is supplied through the dispensing nozzle. Generally, having a low temperature variation on the heated and softened solder glass material may help to provide a more controlled flow of heated and softened glass material, and/or may help to provide a more even height and/or width of the applied glass material.

By providing a temperature control arrangement for controlling the viscosity of the glass frit powder material by controlling the first heating arrangement, so that the glass frit powder material is applied with a desired viscosity/softness, this may help to e.g. provide a long lasting VIG unit and/or help to improve the yield of VIG assemblies that has a high strength and are able to handle the decreased pressure in the gap between the glass sheets for a long time such as more than 10 or 15 years.

In one or more examples, the step of applying the heated, softened glass frit powder material is conducted by means of a nozzle.

In one or more examples, the heated glass frit powder material may leave the nozzle outlet by gravity.

The nozzle may e.g. be made from a metal material such as aluminium, or other suitable kinds of material that may e.g. have good heat conductive properties.

In one or more examples, the heated glass frit powder material may be forced through a dispensing nozzle outlet by means of a pressure arrangement. This may e.g. provide an extrusion solution where a controlled flow of heated and thereby softened glass frit powder material for an edge sealing material may be obtained. It may help to reduce the manufacturing time of a VIG unit and/or help to maintain a clean nozzle and/or environment wherein the heated glass frit powder material is applied.

The pressure arrangement may be configured to provide a pressure between 0.1 and 6 bar, such as between 0.4 and 4 bar, e.g. between 0.2 to 2 bar to the heated, softened glass frit powder material so as to force it through the outlet.

The pressure arrangement may in one or more examples comprise a displaceable member arranged to provide a pressure on the glass frit powder material to be heated, it may comprise a gas for providing the pressure by pressurizing the gas and/or the like.

For example, the heated and melted glass frit powder material for the edge sealing may be applied with between 3 and 200 cm/minute such as between 7 and 100 cm/minute, e.g. between 14 and 50 cm/minute by means of a nozzle by a relative movement between nozzle outlet and glass sheet or sheets. In one or more examples the edge sealing may be applied even faster such as at a speed above 200 cm/minute.

In one or more examples, the cross sectional area of the nozzle outlet may be between 0.2mm² and 4mm², such as between 0.4mm² and 2mm², preferably between 0.6mm² and 1.4mm².

In one or more examples, heating the glass frit powder material to a softening temperature (T_{frit-powder}) to soften the glass frit powder material is conducted at atmospheric pressure such as externally to the vacuum chamber. Alternatively, it may be provided in the or in a vacuum chamber.

In one or more examples applying the heated, softened glass frit powder material is conducted at atmospheric pressure externally to a vacuum chamber. Alternatively, it may be conducted in the vacuum chamber.

In one or more examples, the step of applying the heated, softened glass frit powder material is conducted in the same vacuum chamber as the step of evacuating the gap between the paired glass sheets.

In one or more examples the re-heating of the applied glass frit powder material by use of at least one heat source is conducted in a vacuum chamber. The re-heating may in other examples be provided externally to the vacuum chamber.

In one or more examples, the temperature of the glass sheets in the vacuum chamber, or externaly to the vacuum chamber during the heating and the applying step may be raised to between 200-400 degrees Celsius. This temperature in the vacuum chamber can be obtained by an infrared lamp, such as an infrared quartz lamp.

In one or more examples, the temperature of the glass sheets in the vacuum chamber during the evacution step may be between 200-400 degrees Celsius. This temperature in the vacuum chamber may e.g. be obtained by one or more infrared lamps, such as infrared quartz lamps.

Independently of which pressure the heating is conducted at, the glass frit powder material can be outgassed during the heating process resulting in a dense glass frit powder material, which can subsequently be heated in a re-heating step at atmospheric pressure or in a vacuum chamber without foaming.

In one or more examples, a heat source such as one or more infrared lamps, such as one or more infrared quartz lamp, heats up the glass sheets for the VIG unit in the vacuum chamber to above 200 degrees Celsius, such as between 200-400 degrees Celsius. By having this temperature, the glass sheets or VIG unit may be cleaned by the raised temperature.

Further, this temperature may also be relevant to provide in the vacuum chamber in case that the re-heating of the edge seal material is provided in the vacuum chamber, as the raised temperature of the glass sheets will pre-heat the glass sheets or VIG unit placed in the vacuum chamber, which may be advantageous in order to provide a reduced temperature difference between the glass sheets when the edge seal material is re-heated.

In case the heated edge seal material is applied in the vacuum chamber, e.g. before the pressure in the vacuum chamber is significantly reduced, the glass sheets for the VIG unit in the vacuum chamber may also be heated to above 200 degrees Celsius, such as between 200-400 degrees Celsius prior to applying the heated and softened edge seal. This may be advantageous in order to provide a reduced temperature difference between the glass sheets when the edge seal material is re-heated.

It is generally understood that in one or more examples, a pre-heating of the glass sheets prior to and/or during applying the heated and softened glass material for the edge seal may be provided either in the vacuum chamber or externally to the vacuum chamber, e.g. by means of convection heating, such as forced convection heating, or by means of radiation heating by means of e.g. infrared lamps, such as infrared quartz lamps.

In one or more examples, the pressure in the vacuum chamber is no higher than 0.5 mbar, such as no higher than 0.1 mbar, such as no higher than 0.05 mbar, such as no higher than 0.01 mbar, such as no higher than 0.005 mbar, such as no higher than 0.001 mbar, such as no higher than 0.0005 mbar, such as no higher than 0.0001 mbar. The VIG unit may then be sealed at this reduced pressure to obtain a desired reduced pressure in the gap between the glass sheets where the support structures are placed.

After the glass frit powder material has outgassed and densified - either under atmospheric pressure or under reduced pressure in a vacuum chamber - it may in further examples be further densified by subjecting it to an increased pressure in a vacuum chamber. If the heating and/or applying step is already conducted under reduced pressure in a vacuum chamber, the pressure may be increased further to an even more reduced pressure.

In one or more examples, gaseous inclusions in the dense glass frit powder material constitutes less than 15% of a total volume of the dense glass frit powder material. In one or more examples, gaseous inclusions in the dense glass frit powder material constitutes less than 10% of the total volume. In one or more examples, gaseous inclusions in the dense glass frit powder material constitutes less than 5% of the total volume. In one or more examples, gaseous inclusions in the dense glass frit powder material constitutes less than 1% of the total volume.

In one or more examples, the at least one heat source is directing the majority of the heating energy, such as from a light source, at the applied glass frit powder material.

This may provide a local heating of the edge seal material in the re-heating process while the remaining part of the glass sheets are not heated to the same degree by the heat source.

In one or more examples, the heat source is a laser.

In one or more examples, the at least one heat source may be a near-infrared or an infrared light source, such as a laser.

By near-infrared (NIR) is meant light in the wavelength range between 750 nm - 1.400 nm (0.75-1.4 µm) and by infrared (IR) is meant light in the wavelength range between 750 nm - 15.000 nm (0.75-15 µm). One of the advantages of heating with a NIR or an IR light source is that it optically absorbs directly in the side seal material.

In one or more examples, the near-infrared or infrared light source is an infrared lamp, such as an infrared quartz lamp.

In one or more examples, the near-infrared or infrared light source is a continuous wave laser or a pulsed laser, wherein the continuous wave laser or a pulsed laser are emitting light in the near-infrared or infrared wavelength range. By using a laser, a localized, efficient, and fast pre-heating of the side seal material is possible.

In one or more examples, the laser is a diode laser, a fibre laser, a solid state laser, or similar. An example of a laser is a 980 nm diode laser. A Thulium fibre laser (e.g. a 200 w laser) emitting light in the IR wavelength range around 2.05 µm is a further example of suitable laser for the pre-heating heat source. Due to the lower absorption in the side seal material at 2 µm compared to the absorption in the NIR wavelength, the process is more uniform.

A solid state laser such as an yttrium aluminum garnet (YAG) laser, e.g. a Yb:YAG laser (Ytterbium-doped YAG laser), a Tm:YAG laser (Thulium-doped YAG laser), a Mo:YAG laser (Erbium-doped YAG laser), a Er:YAG laser (Erbium-doped YAG laser), or a Nd:YAG laser (Neodymium-doped YAG laser), e.g. emitting light in the NIR wavelength range such as at 946 nm, 1064 nm, or 1319 nm, may also be used. Other types of laser may also be used, such as He-Ne lasers emitting light at e.g. 1152 nm, 1523 nm, or 3391 nm, a Ti:Sapphire laser emitting light in the wavelength range around e.g. 800 nm, an InGaAs laser emitting light in the wavelength range of 904-1065 nm, or 1270-1330 nm, or 1430-1570 nm, or a CO₂ laser.

In one or more examples, the applied glass frit powder material has a width w_{FPM} and wherein at the position where the laser light irradiates the glass frit powder material the light is having a spot size being at least 10% larger than the width w_{FPM} of the glass frit powder material. In this manner, it is ensured that the frit powder material is heated evenly across the width of the material. If an NIR/IR lamp is used, it will also be ensured that the width of the NIR/IR light exceeds that of the frit powder material.

To ensure that the laser beam spot size is larger than the width of the frit powder material w_{FPM}, the laser may be de-focussed and possibly collimated to have a larger spot size than that of the light being emitted from the laser.

In one or more examples, w_{FPM} is between 5-10 mm and wherein the spot size of the laser light is between 10-20 mm in diameter. When re-heating of the frit powder material, the heat source needs to move to cover either the entire frit powder material or the first glass sheet and/or the second glass sheet needs to move. Raster scanning may be one manner of moving a laser being the heat source.

In one or more examples, the re-heating of the frit powder material is obtained by moving the at least one heat source around the peripheral edge of the inner surface of the first glass sheet. In one example the heat source may comprise a first heat source and a second heat source.

In one or more examples, the re-heating of the frit powder material is obtained by moving the first glass sheet relative to the at least one heat source.

In one or more examples, the re-heating of the frit powder material is obtained by:
- moving the first heat source along a first periphery of the first glass sheet;
- turning the first glass sheet 90 degree; and
- moving the first heat source along a second periphery of the first glass sheet.

In order to re-heat the frit powder material on a third periphery and a fourth periphery of the first glass, the method may comprise further:
- turning the first glass sheet 90 degrees;
- moving the first heat source along a third periphery of the first glass sheet;
- turning the first glass sheet 90 degrees; and
- moving the first heat source along a fourth periphery of the first glass sheet.

The first periphery on the first glass sheet is opposite of the third periphery and the second periphery on the first glass sheet is opposite of the fourth periphery.

In one or more examples, the heat source comprises a second pre-heating heat source being a near-infrared or an infrared light source.

In one or more examples, the re-heating of the frit powder material is furtherobtained by:
- moving the second heat source along a third periphery of the first glass sheet;
- turning the first glass sheet 90 degree; and
- moving the second heat source along a fourth periphery of the first glass sheet.

In one or more examples, the first heat source and the second heat source are positioned in parallel and moves in parallel.

The above-described methods for re-heating of the frit powder material on the first glass sheet, also applies to frit powder material peripherally applied to the second glass sheet.

The second heat source will normally be identical to the first heat source to ensure an even heating of the frit powder material. Thus, the heat source may comprise a second heat source being a near-infrared or an infrared light source.

In one or more examples, the heat source comprises a multiple of heat sources each being a near-infrared or an infrared light source.

In one or more examples, the heat source may provide that the applied edge seal is re-heated to a temperature above 200 or above 300 degrees Celsius, such as at least 350 degrees Celsius, such as at least 400 degrees Celsius, such as at least 450 degrees Celsius.

In one or more examples, the temperature of the edge seal material provided during the re-heating may be between 380-460 degrees Celsius, such as between 400-440 degrees Celsius, or such as between 410-430 degrees Celsius.

In one or more examples, the method further comprising heating at least the peripheral edge of the first glass sheet and/or the second glass sheet, or the entire glass sheet(s) to a glass sheet temperature (T_{glass-sheet}) before applying the heated, softened glass frit powder material at the first glass sheet and/or the second glass sheet, wherein the glass sheet temperature (T_{glass-sheet}) is lower than the softening temperature (T_{frit-powder}). By heating the first glass sheet and/or the second glass sheet before applying the heated and softened glass material, the glass frit powder material may spread out and/or may make improved contact to adhere to the first glass sheet and/or the second glass sheet to which it is applied.

In one or more examples the one or more glass sheets may be pre-heated by means of a further heating arrangement, such as in a furnace compartment of a furnace, before the heated glass frit material is applied. This may help to reduce the temperature difference between the applied, heated glass frit powder material and the temperature of the one or more glass sheets.

In one or more examples the one or more glass sheets may be pre-heated in a vacuum chamber. The glass sheet(s) may be heated to a temperature between 200-400 degrees Celcius. This temperature in the vacuum chamber can be obtained by an infrared lamp, such as an infrared quartz lamp, or alternatively by convection heating if evacuation has not been started yet.

In one or more examples, the glass sheet temperature (T_{glass-sheet}) is 60-120 degrees Celsius, such as 80-120 degrees Celsius lower than the temperature where the heated, softened glass frit powder material is applied (the softening temperature (T_{frit-powder})), such as 100 degrees Celsius lower.

In one or more examples, the glass sheet temperature (T_{glass-sheet}) may be no more than 40-120 degrees Celsius, such as no more than 80-120 degrees Celsius lower than the temperature where the heated, softened glass frit powder material is applied (the softening temperature (T_{frit-powder})). For example, the temperature difference between the pre-heated glass sheet and the applied edge seal material may be less than 150 degrees Celsius, such as less than 100 degrees Celsius, such as less than 50 degrees Celsius.

In one or more examples, the glass sheet temperature (T_{glass-sheet}) is above 200 degrees Celsius, such as between 200-400 degrees Celsius, such as between 250-380 degrees Celsius, such as between 280-360 degrees Celsius, such as between 300-340 degrees Celsius, or such as between 310-330 degrees Celsius.

In one or more examples the softening temperature (T_{frit-powder}) is above 300 degrees Celsius, such as between 350°C and 550°C, such as between 385°C and 460°C and wherein the glass frit powder material is applied at substantially that temperature.

In one or more examples, the glass frit powder material is a low temperature glass frit powder material.

In one or more examples, the glass frit powder material comprises at least one oxide selected from vanadium oxide, barium oxide, zinc oxide, bismuth oxide, aluminum oxide, silicon oxide, magnesium oxide, chromium oxide, iron oxide, cobalt oxide, sodium oxide, manganese oxide, tantalum oxide, molybdenum oxide, niobium oxide, tellurium oxide, or any combinations of one or more thereof.

In one or more examples the glass frit powder material comprises at least one oxide selected from vanadium oxide, bismuth oxide, tellurium oxide, or any combinations of one or more thereof.

In one or more examples, the glass frit powder material comprises less than 0.1 wt% lead.

In one or more examples, the glass frit powder material comprises less than 1 wt% binder and/or less than 1 wt% solvent.

In one or more examples, the glass frit powder material comprises less than 1% solvent. In one or more examples, the glass frit powder material comprises less than 1% binder.

In one or more examples, the glass frit powder material is completely free from solvent. In one or more examples, the glass frit powder material is completely free from binder.

In one or more examples, the support structures comprise a metal, a ceramic, or a glass.

In one or more examples, the support structures have a height of 0.05 to 0.7 mm, or 0.1 to 0.4 mm, or 0.15 to 0.3 mm.

In one or more examples, the method further comprises positioning the one or more support structures on the inner surface of the second glass pane. This is provided before pairing the glass sheets.

In one or more examples, the dense glass frit powder material has a height (h), wherein over the periphery of the first glass sheet there are variations in the height (h) of the dense glass frit powder material allowing for the evacuation of the void between the first glass sheet and the second glass sheet.

In one or more examples, the method further comprises cooling the applied glass frit powder material to a solidifying temperature (T_{S}) prior to the re-heating step.

In one or more examples, the solidifying temperature (T_{S}) is lower than the softening temperature (T_{frit-powder}) by at least 20 degrees Celsius, such as by at least 30 degrees Celsius, such as by at least 40 degrees Celsius, such as by at least 60 degrees Celsius, such as by at least 80 degrees Celsius.

In one or more examples, the pairing of the first glass sheet and the second glass sheet is conducted under pressure in a vacuum chamber.

In one or more examples, the pressure in the vacuum chamber is no higher than 0.001 mbar, such as no higher than 0.0005 mbar, such as no higher than 0.0001 mbar when the VIG unit is sealed.

In one or more examples, the pressure in the sealed cavity between the two glass sheets is no higher than 0.001 mbar, such as no higher than 0.0005 mbar, or such as higher than 0.0001 mbar.

In one or more examples, the paring of the first glass sheet and the second glass sheet is conducted in the same vacuum chamber as the applying step.

By the above is obtained that the glass frit powder material can be outgassed in a vacuum chamber and result in a dense glass frit powder material, which can subsequently be heated in a re-heating step in a vacuum chamber without foaming. This means that the applying and the re-heating both can be done in a vacuum chamber, which significantly eases the production of VIG units.

Producing VIG units in vacuum chambers opens up for many possibilities e.g. that the previous need for a pump-out-port is eliminated. An efficient cleaning of surfaces e.g. by means of plasma, ozone, ultraviolet light is also facilitated. The need for a getter recess or activation of getter may also be eliminated.

In one or more examples, the sealing of the paired glass sheets is obtained by maintaining the temperature from the re-heating step for a defined period of time. In one or more examples, the sealing of the paired glass sheets is obtained by heating at least the glass sheets peripherally to a heating temperature (T_{H}). In one or more examples, the temperature (T_{H}) is between 300-500 degrees Celsius, such as between 380-460 degrees Celsius, such as between 400-440 degrees Celsius, or such as between 410-430 degrees Celsius.

In one or more examples, the pressure in the sealed cavity between the two glass sheets is reduced to a pressure of no higher than 0.001 mbar, such as no higher than 0.0005 mbar, or such as higher than 0.0001 mbar.

In one or more examples, the heating temperature (T_{H}) is maintained for at least 1 minutes, such as for at least 2 minutes, such as for at least 5 minutes.

In one or more examples, the heating temperature (T_{H}) is maintained for a period of time between 1 and 30 minutes, such as between 1 and 15 minutes, such as between 2 and 10 minutes, such as between 3 and 7 minutes or such as between 5 and 6 minutes.

In one or more examples, the first glass pane and the second glass pane are strengthened glass sheets.

In one or more examples, the first glass sheet and the second glass sheet have been strengthened by thermal tempering, a plasma source, an ion source, or chemically strengthened.

In one or more examples, the first glass sheet and the second glass sheet have been strengthened by thermal tempering.

In one or more examples, the first glass sheet has a thickness of between 1-6 mm, or between 2-5 mm, or between 2.5-4.5 mm. In one or more examples, the first glass sheet has a thickness between 1.5mm and 4mm such as between 1.8mm and 2.2mm, e.g. around 2mm.

In one or more examples, the second glass sheet has a thickness of between 1-6 mm, or between 2-5 mm, or between 2.5-4.5 mm. In one or more examples, the first glass sheet has a thickness between 1.5mm and 4mm such as between 1.8mm and 2.2mm, e.g. around 2mm.

In one or more examples, at least one of the glass sheets are a soda lime silica glass or an alkali aluminosilicate glass.

In one or more examples, the inner surface of at least the first glass sheet further comprises a low-emittance coating.

In one or more examples, the inner surfaces of both glass sheets comprise a low-emittance coating.

In one or more examples, a clamping arrangement, such as a one or more clamps or actuators, may provide a compression force to the edge sealing material during and/or after said re-heating of the applied glass frit powder material. This may e.g. help to provide an improved bonding of the edge seal to the glass sheet surfaces. The clamping arrangement may provide a compression force during cooling and thus hardening of the edge seal material after the re-heating.

In one or more examples, a first heating arrangement such as one or more Infrared light sources, may provide a first pre-heating of the glass sheets, such as wherein a second heat source may provides a re-heating of the applied glass frit powder material while said pre-heating is provided. This may be advantageous in order to provide a good bonding of the edge seal and/or in order to protect the glass sheets from too large temperature differences.

In one or more examples, said re-heating of the applied glass frit powder material may at least partly re-soften the applied glass frit powder material, such as so that the applied glass frit powder material at least partly melts.

The re-heating may hence provide a re-softening of the applied glass frit powder material that was initially applied in a heated and softened state for the edge seal. After the material has been applied it may be allowed to cool down and hereby harden. The re-heating provides that at least a part of the edge seal material is re-softened by means of the at least one heat source, and hence provides a melting/fusing operation that provides and/or ensures a sufficiently strong and air-tight edge seal material bonding to the glass sheets after cool down of the edge seal. The re-heating may provide that only an outer "shell" part of the edge seal softens to bond to one or both glass sheets, or it may provide that substantially the entire edge seal material is re-heated by the heat source and hence is softened, e.g. until it is melted. The re-heating may generally provide that the temperature of the edge seal material is raised above a rated glass transition temperature Tg of the glass frit powder material that is a temperature parameter for glass frit defining a temperature at which the glass structure changes.

Disclosed herein is also a vacuum insulated glass (VIG) unit manufactured according to the method as disclosed herein.

Disclosed herein is also a vacuum insulated glass (VIG) unit comprising:
- paired glass sheets separated by support structures maintaining a gap between said paired glass sheets,
- a dense edge sealing peripherally arranged creating a sealed cavity between the paired glass sheets,
wherein the edge sealing is a low temperature glass frit powder material comprising less than 0.1 wt% lead, less than 1 wt% solvent and less than 1 wt% binder.

Disclosed herein is also the use of the vacuum insulated glass (VIG) unit manufactured according to the method as disclosed herein for a window or a refrigerator door.

In one or more examples, the window is for a fixed or ventilating window of a commercial building.

In one or more examples, the window is for a fixed or ventilating window of a residential building.

In one or more examples, the window is for a roof window or a skylight window.

In one or more examples, the window is for a vertical window application.

The above described and other features are exemplified by the following figures and detailed description.

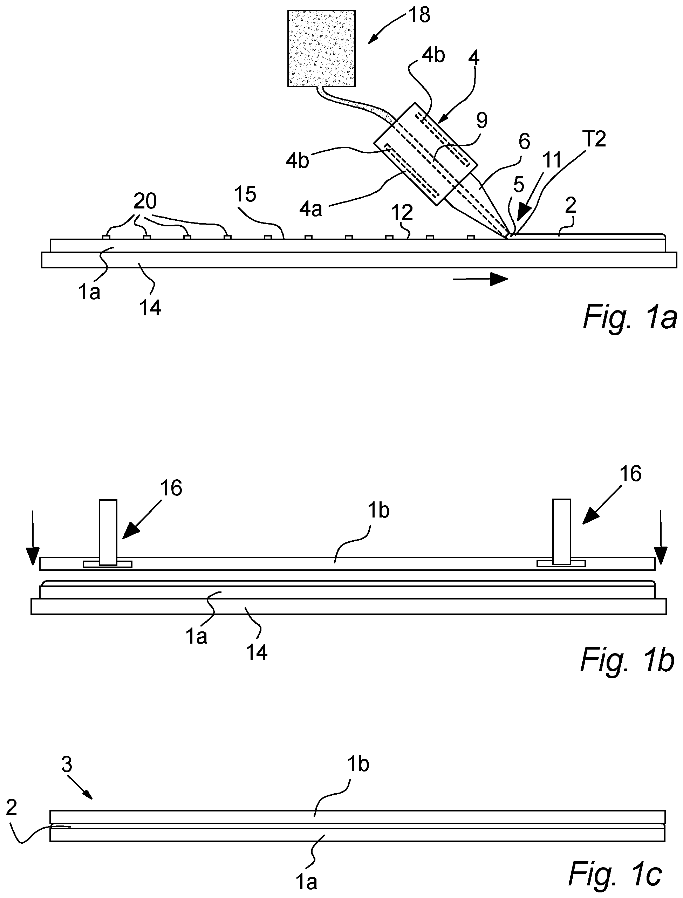

Fig. 1a illustrates schematically an arrangement and method of providing edge sealing material at a glass sheet 1a for a Vacuum Insulated Glass (VIG) unit.

A glass sheet 1a is arranged substantially horizontally, e.g. on a support surface 14.

A dispensing nozzle 6 applies strips of a heated glass frit powder material 5 from a glass frit powder material storage 18, onto an upwardly facing surface 15 of the first glass sheet 1a. The glass frit powder material 5 is heated by means of a first heating arrangement 4, so as to soften the glass frit powder material 5, and is applied to a surface 12 of the glass sheet 1a to provide a an edge sealing material for a vacuum insulated glass (VIG) unit.

The glass frit powder material 5 may leave the nozzle outlet by gravity, but in other embodiments of the present disclosure the glass frit powder material 5 may be forced through the dispensing nozzle 6 outlet 11 by means of a pressure arrangement such as an actuator or motor displaceable pressure plate, or by means of a pressurized gas.

The dispensing nozzle 6 may e.g. be made from a metal material such as aluminium, or other suitable kinds of material that may e.g. have good heat conductive properties.

The first heating arrangement 4 comprises a heat capacity element 4a arranged to store heat provided by one or more heaters 4b, and the heat capacity element 4a is configured to abut or provide a guiding tube 9 so as to transfer heat to the glass frit powder material to soften the glass frit powder material 5 to a softening temperature (T_{frit-powder}).

The heater or heaters 4b may in one or more embodiments of the present disclosure comprise one or more electric heater elements, but other types of heating arrangements may also or alternatively be used in further embodiments of the present disclosure, such as e.g. induction heating, heating by laser and/or the like.

The heat capacity element 4a may have a mass and heat transfer capabilities that help to provide a low temperature variation during heating and softening the glass frit powder material 5 and to assure a good heat transfer to the glass frit powder material to be heated.

It is generally, however, understood that the heat capacity element 4a may be omitted in further embodiments of the present disclosure, dependent e.g. on the heating capability of the heater 4b.

The heated glass frit powder material 5 may in one or more embodiments of the present disclosure be a low temperature glass frit powder material such as an oxide glass frit powder material comprising one or more additives such as Vanadium and/or tellurium and/or bismuth or the like arranged to decrease the softening temperature of the glass frit powder material.

It is generally understood that in one or more embodiments of the present disclosure, the glass frit powder material 5 may be heated to a temperature above 300°C such as between 350°C and 550°C, such as between 385°C and 460°C by means of the first heating arrangement 4, and applied at substantially that temperature. However, it is understood that the temperature may be lower than 350°C dependent of the glass frit powder material 5 type, such as low temperature glass frit powder material.

In one or more embodiments of the present disclosure, a temperature control arrangement (no illustrated) may control the viscosity/softness with which the glass frit powder material is applied by controlling the first heating arrangement 4. This may e.g. be provided by a temperature control arrangement comprising a PID (proportional-integral-derivative) or PD (proportional derivative) controller based on one or more temperature feedbacks from one or more temperature sensors such as thermocouples or optical temperature sensors.

The heated edge sealing glass frit powder material 5 is supplied during a relative displacement between the glass sheet 1a and the nozzle 6, e.g. by moving the support base/surface 14, and the outlet 11 for the heated glass frit powder material 5 while keeping the nozzle 6 and the outlet 11 in a fixed position or vice versa.

The support surface 14 may be part of or provided by a transportation arrangement such as a conveyer solution comprising a conveyer belt, e.g. with a flat and hard surface arranged below the conveyer belt, it may alternatively comprise rollers for supporting the glass sheet while the glass frit powder material 5 is applied and/or the like.

The glass sheet 1a may in one or more embodiments of the present disclosure be rotated (not illustrated in fig. 1a) in the horizontal plane after first strips of heated glass frit powder material is supplied along parallel edges of the glass sheet 1a by first dispensing nozzles 6, before further strips of softened glass frit powder material is supplied along other parallel edges of the glass sheet 1a by e.g. further nozzles or the same dispensing nozzles 6.

As illustrated in fig. 1b, after the heated and thereby softened glass frit powder material 5 has been applied along the edges of the glass sheet to provide an edge sealing material by the dispensing nozzle or nozzles 6, a second glass sheet 1b is subsequently paired with the first glass sheet 1a.

It is understood that support structures 20, such as support pillars, are distributed between the glass sheets 1a, 1b to maintain a gap between the glass sheets 1a, 1b when the gap 13 is evacuated.

This glass sheet pairing process may e.g. be provided by automation equipment 16 such as one or more gripping arrangements 16 controlled by a control arrangement (not illustrated) which are able to hold the second glass sheet 1b and lower it onto the first glass sheet 1a so that it supports on the edge sealing 2 and possibly also support structures 20.

The gripping arrangements 16 may e.g. comprise one o more linear actuators, e.g. controllable by one or more electric motors or a pneumatic or hydraulic system (not illustrated), or by means of a robotic arm. The gripping arrangements 16 may e.g. comprise suction cups attached to a major surface of the glass sheet, or clamping members for clamping the glass sheet between clamps of the gripping arrangement 16.

The glass sheet 1b may also, in embodiments of the present disclosure, have an edge seal material (not illustrated) applied prior to the pairing, to be arranged to face and touch the edge seal material on the first glass sheet.

It is understood that the glass sheets 1a, 1b may be paired by means of the gripping arrangements 16 while the edge seal material 2 is still heated and soft, or it may be provided after the edge seal has cooled to a temperature below e.g. 150 °C or below 100°C, such as below 60°C, and has hence hardened.

After this, the edge seal material 2 of the glass sheet assembly 3 as shown in fig. 1c is ready to be re-heated as disclosed in more details later on.

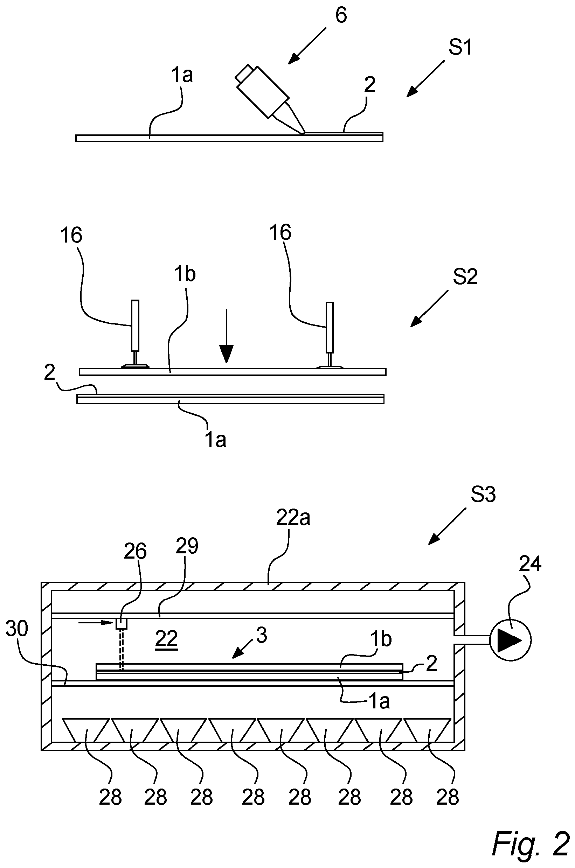

Fig. 2 illustrates schematically a flow chart, where in step S1, the heated and softened glass frit powder material 5 is applied for the edge sealing by means of the nozzle 6 to a glass sheet 1a such as a tempered glass sheet, e.g. a thermally tempered glass sheet. The nozzle may be moved relative to the glass sheet, the glass sheet may be moved relative to the nozzle, or a combination thereof. The glass frit powder material may have a temperature above 300°C such as between 350°C and 550°C, such as between 385°C and 460°C when it is applied.

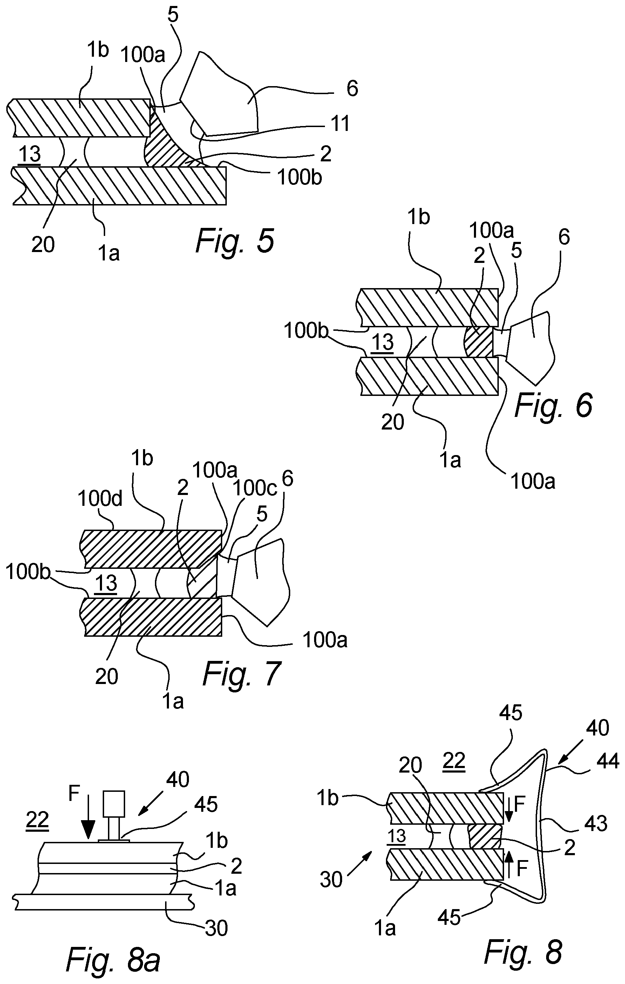

In step S2, the glass sheet 1a with the applied heated and softened glass frit powder material is paired with a further glass sheet 1b, and a plurality of support structures (not illustrated) are provided between the glass sheets to maintain the gap between the glass sheets after evacuation. Step S2 may e.g. be omitted in case the heated and softened glass frit powder material for the edge sealing is provided to already paired glass sheets (see e.g. fig. 5, 6 and 7). The support structures may also be provided prior to applying the edge seal material 2.

In step S3, the VIG unit assembly 3 provided in step S2 is placed in a vacuum chamber 22 and the gap between the major surfaces of glass sheets 1a, 1b facing each other is evacuated by evacuating the vacuum chamber by means of a vacuum pump 24.

Also, in this embodiment, the edge sealing 2 is reheated and hence at least partly or fully re-softened in the vacuum chamber 22 in order to provide a sufficient bonding of the edge sealing material to the glass sheets. The vacuum chamber 22 is enclosed by walls 22a. This reheating may be provided by radiation heating by means of a radiation heater 26 such as laser heating for re-heating the edge sealing 2 and/or IR (Infrared) heating by means of one or more IR radiators 28.

In the present example of fig. 2, a radiation heater 26 such as a laser is moved/guided along the edge sealing on a guiding structure 28 such as a rail arrangement by means of an electric motor, a wire or chain system or the like, in order to heat the applied edge sealing material. Alternatively, a robotic arm may be used as the guiding structure 28. Further, the VIG unit assembly 3 may be placed on a support arrangement 30 such as a surface 30 which may in still further embodiments be "permeable" to radiation heating provided by the IR heaters 28 so that the IR heaters 28 can heat the glass sheets 1a, 1b. The support arrangement 30 may e.g. alternatively comprise a number of distributed support surfaces/devices such as rods (not illustrated) on which the assembly 3 rests/support in the chamber 22, or it may be a mesh or the like.

It is understood that IR heaters 28 may be placed both beneath the assembly 3 and above (not illustrated) the assembly 3 in further embodiments.

Radiation heaters 28, such as infrared heaters, may in various embodiments of the present disclosure be used as illustrated, to heat the VIG assembly 3. This may be done In order to preheat the VIG unit assembly 3 prior to and/or during the reheating of the edge sealing 2 by the radiation heater 26 and/or prior to the evacuation by the vacuum pump 24. The pre-heating by the heater(s) 28 may also help to provide a cleaning of the glass sheets 1a, 1b surfaces, especially if heated to 200°C or above.

Hence, in embodiments of the present disclosure, a first heating arrangement such as one or more Infrared light sources, may provide a first pre-heating of the glass sheets 1a, 1b, and a second heat source 26 may provide said re-heating of the applied glass frit powder material 2 for the edge seal.

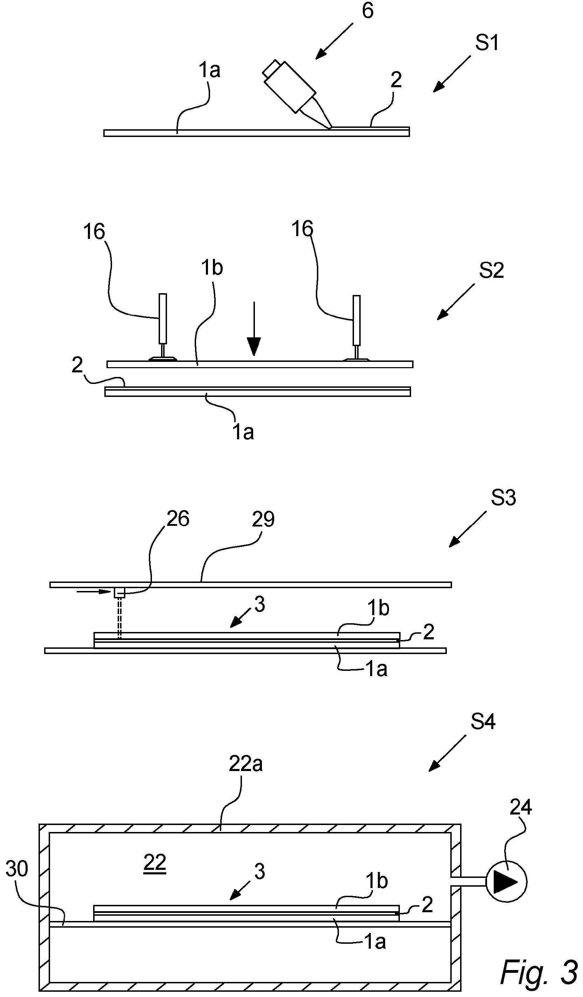

Fig. 3 illustrates a flow chart, where in step S1, the heated and softened glass frit powder material 5 is applied for the edge sealing by means of the nozzle 6 to a glass sheet 1a such as a tempered glass sheet, e.g. a thermally tempered glass sheet. The nozzle may be moved relative to the glass sheet, the glass sheet may be moved relative to the nozzle, or a combination thereof. The glass frit powder material may have a temperature above 300°C between 350°C and 550°C, such as between 385°C and 460°C when it is applied.

In step S2, the glass sheet 1a with the applied heated and softened glass frit powder material 2 is paired with a further glass sheet 1b, and a plurality of support structures (not illustrated) are provided between the glass sheets to maintain the gap between the glass sheets after evacuation. Step S2 may e.g. be omitted in case the heated and softened glass frit powder material for the edge sealing is provided to already paired glass sheets (see e.g. fig. 5, 6 and 7).

In step S3, the edge sealing is reheated by a heat source 26 and hence at least partly or fully re-softens in order to provide a sufficient bonding of the edge sealing material to the glass sheets 1a, 1b. This may be provided by radiation heating such as laser 26 heating and/or IR 28 heating. In the present example, a radiation heater 26 such as a laser is moved/guided along the edge sealing on a guiding structure 28 such as a rail to heat it, but it may also be a robotic arm or another suitable solution. Further, the VIG unit assembly 3 may be placed on a support surface 30 or held by another type of supportive member 30.

In step S4 the VIG assembly 3 is placed in a vacuum chamber 22 after the re-heating of the material 2, and the gap between the glass sheets is evacuated by evacuating the vacuum chamber 22 by means of a vacuum pump 24.

It is generally understood that the evacuation may be done either through an air permeable structure in the edge sealing or through a hole in one of the glass sheets.

The sealing solution for sealing the paired glass sheets 1a, 1b to provide the final VIG unit may be provided in different ways, but it may for example be provided by means of an evacuation tube solution where an evacuation tube, such as a glass tube provides a flow path for evacuation of the gap between the glass sheets 1a, 1b, and where a part of the evacuation tube is subsequently melted to seal the opening in the tube. The tube may be placed in or at an evacuation opening in one of the glass sheets 1a, 1b or in the edge sealing material 2.

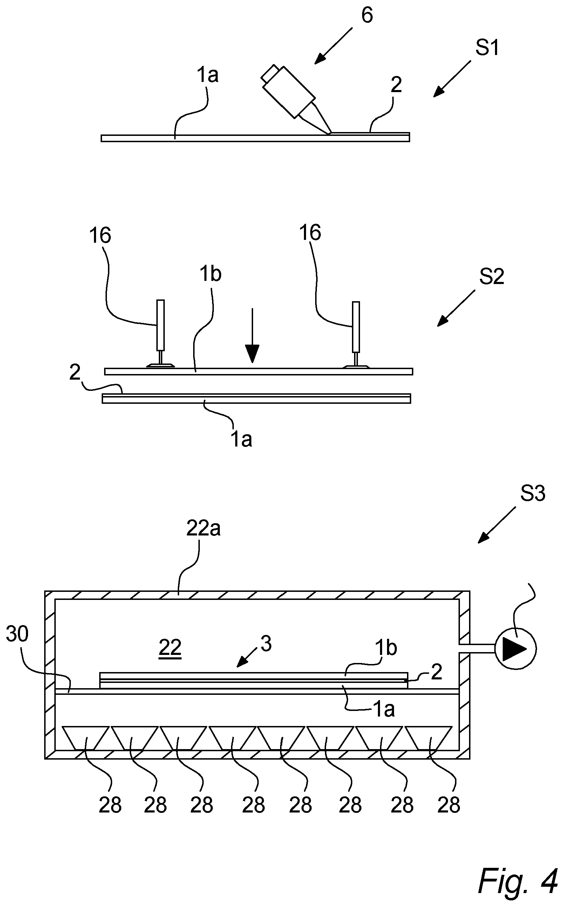

Fig. 4 illustrates a flow chart, where in step S1, the heated and softened glass frit powder material 5 is applied for the edge sealing by means of the nozzle 6 to a glass sheet 1a as e.g. described in relation to one or more of figs. 1-3.

In step S2, the glass sheet 1a with the applied heated and softened glass frit powder material is paired with a further glass sheet 1b, and a plurality of support structures (not illustrated) are provided between the glass sheets to maintain the gap between the glass sheets after evacuation. Step S2 may e.g. be omitted in case the heated and softened glass frit powder material 5 for the edge sealing 2 is provided to already paired glass sheets (see e.g. fig. 5, 6 and 7)

In step S3, the VIG unit assembly 3 provided in step S2 is placed in a vacuum chamber 22 and the gap between the glass sheets is evacuated by evacuating the vacuum chamber by means of a vacuum pump 24. Also, in this embodiment, the edge sealing 2 is reheated and hence at least partly or fully re-softened in the vacuum chamber in order to provide a sufficient bonding of the edge sealing material to the glass sheets. This may be provided by radiation heaters 28 such as infrared IR heating. The radiation heaters 28 may heat up substantially the whole VIG unit assembly 3 in the vacuum chamber 22. Further, the VIG unit assembly may be placed on a support surface 30. This heating may both reheat and hence soften the edge seal material 2 enough to provide a sufficient bonding, and it may also help to clean the glass sheet 1a, 1b surfaces facing the gap with the support structures. This heating by the heater or heaters 28 may be provided to a temperature above 200 step is between 200 degrees Celsius, such as between 200-350 degrees Celsius, such as between 200-300 degrees Celsius, which may be enough in order to provide a sufficient reheating/resoftening of the edge seal material 2, if the edge seal material is made from certain types of low temperature glass frit powder material.

It is generally understood that maintaining the heating temperature below 420 degrees Celsius, such as below 400 or below 380 degrees Celsius may also help to prevent a de-tempering of the glass sheets 1a, 1b in case these are made from thermally tempered glass sheets. It is though understood that in other embodiments of the present disclosure, the glass sheets 1a, 1b may be made from annealed glass sheets or other types of glass sheets that are not thermally tempered.

Fig. 5 illustrates schematically an embodiment of the present disclosure, wherein the glass sheets 1a, 1b have been paired before the glass frit powder material 5 is applied. The paired glass sheets 1a, 1b in fig. 5 comprises a stepped edge configuration so that the heated glass frit powder material is applied to an end surface 100a of a first glass sheets 1b and a major surface 100b or another surface of the other glass sheet 1a facing towards a plane (not illustrated) defined by a major surface of the first glass sheet 1b.

One of the glass sheets, in this case 1a, thus has a glass sheet circumference that is a bit larger than the other glass sheet in order to obtain the stepped edge configuration. For example, the glass sheet 1a may have a surface area of a major surface of the glass sheet that is at least 0.1%, such as 0.5%, e.g. at least 1% larger than the surface area of the glass sheet 1b comprising the end edge 100a.

In one or more embodiments of the present disclosure, the glass frit powder material may, after it has been applied/extruded, automatically flow in between the glass sheets 1a, 1b, to bond to the glass sheet surfaces, such as major surfaces, facing the gap 13, due to e.g. the viscosity of the glass frit powder material 5 controlled by a temperature control arrangement controlling the heating of the heated, softened glass frit powder material 5 to be applied. The heated and softened glass frit powder material 5 may in one or more embodiments of the present disclosure automatically flow between 2 and 7mm such as between 3 and 5mm into the gap 13, measured from the edge 100a. The same may in one or more embodiments of the present disclosure apply for the embodiments described in relation to e.g. fig. 6 and/or 7.

Fig. 6 illustrates schematically an embodiment of the present disclosure wherein the heated and softened glass frit powder material 5 is provided in between glass sheets 1a, 1b that have been paired before the glass material 5 is applied. The glass sheets may here have substantially the same size (area of the major surfaces of the glass sheets) and shape.

Fig. 7 illustrates schematically an embodiment of the present disclosure wherein one of the glass sheets (but it may also be the other of the glass sheets) comprises an inclining end edge surface 100c that inclines from an end surface100a that is substantially perpendicular to the major surface 100d of the glass sheet 1b facing away from the gap 13. The surface 100c inclines from the end edge 100a and towards the gap 13, thereby providing a funnel feature that provides more space for applying the heated and softened glass frit powder material 5 for the edge sealing 2.

Fig. 8 illustrates schematically an embodiment of the present disclosure wherein a clamping arrangement 40 provides a mechanical compression force F to the edge sealing 2 during cooling of the edge sealing to harden the edge sealing 2 after the reheating of the edge seal as previously described. Either the glass sheets 1a, 1b may have been paired before the heated and softened glass frit powder material 5 is applied by the nozzle arrangement 6, e.g. as disclosed in one or more of figs. 5-7 or alternatively, the heated glass frit powder material 5 may have has been applied and the glass sheets1a, 1b are then subsequently paired, see e.g. figs. 1a-1c.

The clamping arrangement 40 comprises edge clamps 44 having pressure members 45 arranged to press the edges of the glass sheets 1a, 1b towards each other, thereby providing a compression force F on the edge sealing 2 between glass sheets 2a, 2b. The compression force is in fig. 8 provided by a resilient part 43 of the clamp 44 which may e.g. be made from a resilient metal plate, but it may also comprise a spring such as a coil spring or the like (not illustrated) for providing the resiliency and thus the compression force on the edge sealing 2.

It is generally understood that compression forces in one or more embodiments of the present disclosure may be provided by means of a plurality of clamps 44 distributed around the VIG assembly 3 and pressing on the edges of the major surfaces of the glass sheets 1a, 1b facing away from the gap 13.

Fig. 8a illustrates a further embodiment of the present disclosure, where the clamping arrangement 40 comprises one or more pressure devices, such as linear actuators, comprising a pressure member 45 configured to provide a mechanical compression force F during the re-heating of the edge seal 2, and e.g. also until the edge seal has cooled sufficiently again to harden. The pressure devices may be controllable by a controller, and help to apply a compression force F to the edge seal while it cools. A plurality of the pressure devices may be used 40 and distributed along/around the VIG unit to provide a distributed compression pressure.

The clamping arrangement 40 may in further embodiments comprise one or more devices having a mass and thus a weight that provides the compression force F due to gravity.

It is generally understood that the compression pressure F may be provided in the vacuum chamber 22, e.g. prior to and/or during the evacuation of the gap 13 of the VIG unit in the vacuum chamber 22, or external to this chamber 22, dependent on the location of the re-heating and subsequent cooling of the edge seal in the VIG unit manufacturing process, see e.g. figs. 1a-4 and the description thereto.

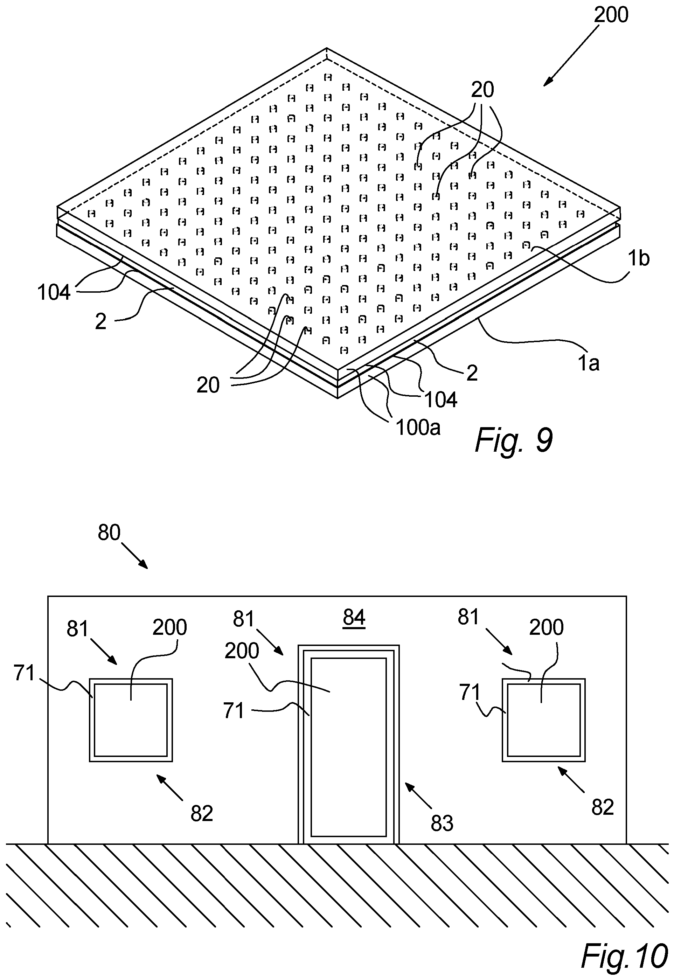

Fig. 9 illustrates schematically in perspective a VIG unit 200 according to one or more of the embodiments and/or aspects described above and/or below. The VIG unit comprises the glass sheets 1a, 1b, and an edge sealing 2 made from a glass frit powder material 5 which was heated and softened before it was applied along edges 104 to seal a gap between the glass sheets 1a, 1b.

A plurality of support structures 20 are arranged in the gap 13 of the glass sheet assembly 3, and the gap 13 is evacuated to a pressure below 10⁻³ bar, for example below 10⁻⁵ bar, such as below 10⁻⁶ bar, e.g. below 10⁻⁴mbar such as below 10⁻⁵mbar.

The support structures 20 may e.g. have been arranged at one of the glass sheets before the heated and softened glass frit powder material 5 is provided, but in other embodiments of the present disclosure, the support structures may be distributed after the edge sealing is applied and before another glass sheet is paired with the glass sheet having the edge sealing material applied.

The glass sheets 1a, 1b may in one or more embodiments of the present disclosure each have a thickness between 1.5mm and 4mm such as between 1.8mm and 2.2mm, e.g. around 2mm.

The height of the support structures may provide that the distance in the gap between the glass sheets 1a, 1b, measured perpendicularly to the major surfaces of the glass sheets 1a, 1b facing each other and the gap, may in embodiments of the present disclosure be below 0.5 mm, such as below 0.3 mm, e.g. around 0.2 or below, such as around 0.15 or below, such as around 0.1 mm.

In fig. 9, the edge sealing 2 is applied on a surface along the edges 104 separating end surfaces 100a and a major surface of the glass sheets 1a, 1b facing the gap between the glass sheets which is maintained by the support structures 20.

In one or more embodiments of the present disclosure, a getter (not illustrated) may be placed in the gap 13 between the glass sheets. This getter may comprise a reactive material and help to maintain a reduced pressure over time in the gap by absorbing/"getting" gasses that are released from e.g. the edge sealing over time. The getter may in embodiments of the present disclosure be adapted to the gasses that may be included in the heated and softened edge sealing when it is applied, so that the getter may absorb these if they are released from the edge sealing.

Fig. 10 illustrates a building 80 seen from the outside/exterior, comprising apertures 81 for windows 82 and a door 83 in the outer wall 84 of the building 80.

The apertures 81 are covered by VIG units 200 manufactured in accordance with one or more of the embodiments of the present disclosure. The VIG units 200 are placed in a covering frame 71, and the frame 71 is then attached by fastening parts (not illustrated) such as mechanical fastening parts in the form of one or more hinges, screws, nails, mounting and/or the like to the wall 84.

Generally, it is to be understood that the glass sheets described in the present disclosure and used for VIG assemblies/units in one or more embodiments may be transparent to light such as light having a wavelength in the range of about 400 nm to 700 nm to at least such a degree which enables humans to see through the glass sheets of the VIG unit. Also the glass sheets may be configured so that infrared light (about 700 nm to 1mm) is transmitted through the glass sheet.

One or more of the glass sheets may e.g. comprise a low-E coating for improving the U-value of the VIG. The low E coating may in one or more embodiments of the present disclosure be arranged at a surface of one of the glass sheets 1a, 1b, and faces the gap 13 between the glass sheets.

In further embodiments of the present disclosure, the VIG units 200 manufactured in accordance with one or more of the embodiments described in this document may be used for e.g. refrigerator units or ovens such as conventional household ovens as e.g. windows allowing viewing into the interior of such appliances.

## Claims

1. A method of providing an edge sealing (2) in the process of providing a vacuum insulated glass (VIG) unit (200) comprising paired glass sheets (1a, 1b) separated by support structures (20) maintaining a gap between said paired glass sheets (1a, 1b), wherein the method comprises:
• providing a first glass sheet (1a) and a second glass sheet (1b),
• heating a glass frit powder material (5) to a softening temperature (T_{frit-powder}) to soften the glass frit powder material,
• applying the heated, softened glass frit powder material (5) at the first glass sheet (1a) and/or the second glass sheet (1b), wherein the first glass sheet (1a) and the second glass sheet (1b) are paired before or after applying the heated, softened glass frit powder material,
• re-heating the applied glass frit powder material by use of at least one heat source (28, 26);
• evacuating the gap (13) between the paired glass sheets (1a, 1b) in a vacuum chamber (22) and
• sealing the paired glass sheets to provide the VIG unit (200).

2. The method of providing an edge sealing according to claim 1 wherein the first glass sheet (1a) and the second glass sheet (1b) are paired before applying the heated, softened glass frit powder material (5).

3. The method of providing an edge sealing (2) according to claim 1 wherein the first glass sheet (1a) and the second glass sheet (1b) are paired after applying the heated, softened glass frit powder material.

4. The method of providing an edge sealing (2) according to any of the preceding claims wherein the re-heating of the applied glass frit powder material (5) by use of at least one heat source (28, 26) is conducted in the vacuum chamber (22).

5. The method of providing an edge sealing (2) according to any of the preceding claims wherein the first glass sheet (1a) and the second glass sheet (1b) have been strengthened by thermal tempering, a plasma source, an ion source, or chemically strengthened.

6. The method of providing an edge sealing (2) according to any of the preceding claims wherein the temperature of the glass sheets (1a, 1b) in the vacuum chamber (22) during the evacuation step is between 200-400 degrees Celsius.

7. The method of providing an edge sealing (2) according to any of the preceding claims wherein the heat source (26) comprises a near-infrared or an infrared light source, wherein the near-infrared or infrared light source is:
∘ a continuous wave laser or a pulsed laser (26), wherein the continuous wave laser or a pulsed laser are emitting light in the near-infrared or infrared wavelength range,
∘ or an infrared lamp (28), such as an infrared quartz lamp.

8. The method of providing an edge sealing according to claim 7 wherein the applied glass frit powder material has a width w_{FPM} and wherein at the position where the laser light irradiates the glass frit powder material the light is having a spot size being at least 10% larger than the width w_{FPM} of the glass frit material.

9. The method of providing an edge sealing according to any of the preceding claims further comprising heating at least the peripheral edge of the first glass sheet (1a) and/or the second glass sheet (1b) to a glass sheet temperature (T_{glass-sheet}) before applying the heated, softened glass frit powder material at the first glass sheet and/or the second glass sheet, wherein the glass sheet temperature (T_{glass-sheet}) is lower than the softening temperature (T_{frit-powder}).

10. The method of providing an edge sealing according to any of the preceding claims wherein the softening temperature (T_{frit-powder}) is above 300°C, such as between 350°C and 550°C, such as between 385°C and 460°C and wherein the glass frit powder material (5) is applied at substantially that temperature.

11. The method of providing an edge sealing according to any of the preceding claims wherein the glass frit powder material comprises at least one oxide selected from vanadium oxide, barium oxide, zinc oxide, bismuth oxide, aluminum oxide, silicon oxide, magnesium oxide, chromium oxide, iron oxide, cobalt oxide, sodium oxide, manganese oxide, tantalum oxide, molybdenum oxide, niobium oxide, tellurium oxide, or any combinations of one or more thereof.

12. The method of providing an edge sealing according to any of the preceding claims wherein the glass frit powder material comprises less than 1 wt% binder and/or less than 1 wt% solvent.

13. The method of providing an edge sealing according to any of the preceding claims wherein a clamping arrangement (40), such as a one or more clamps (44) or actuators, provides a compression force (F) to the edge sealing material (2) during and/or after said re-heating of the applied glass frit powder material.

14. The method of providing an edge sealing according to any of the preceding claims wherein a first heating arrangement (28) such as one or more Infrared light sources, provides a pre-heating of the glass sheets (1a, 1b), such as wherein a second heat source (26) provides said re-heating of the applied glass frit powder material while said pre-heating is provided.

15. The method of providing an edge sealing according to any of the preceding claims wherein said re-heating of the applied glass frit powder material at least partly re-softens the applied glass frit powder material, such as so that the applied glass frit powder material at least partly melts.

## Patentansprüche

1. Verfahren zum Bereitstellen eines Randverbunds (2) in dem Prozess zum Bereitstellen einer Vakuum-Isolierglas(VIG)-Einheit (200), umfassend zusammengelegte Glasscheiben (1a, 1b), die durch Tragstrukturen (20) getrennt sind, die einen Spalt zwischen den zusammengelegten Glasscheiben (1a, 1b) aufrechterhalten, wobei das Verfahren Folgendes umfasst:
• Bereitstellen einer ersten Glasscheibe (1a) und einer zweiten Glasscheibe (1b),
• Erwärmen eines Glasfrittenpulvermaterials (5) auf eine Erweichungstemperatur (T_{frit-powder}), um das Glasfrittenpulvermaterial zu erweichen,
• Aufbringen des erwärmten, erweichten Glasfrittenpulvermaterials (5) auf die erste Glasscheibe (1a) und/oder die zweite Glasscheibe (1b), wobei die erste Glasscheibe (1a) und die zweite Glasscheibe (1b) zusammengelegt werden, bevor oder nachdem das erwärmte, erweichte Glasfrittenpulvermaterial aufgebracht wird,
• Wiedererwärmen des aufgebachten Glasfrittenpulvermaterials unter Verwendung mindestens einer Wärmequelle (28, 26);
• Evakuieren des Spalts (13) zwischen den zusammengelegten Glasscheiben (1a, 1b) in einer Vakuumkammer (22) und
• Abdichten der zusammengelegten Glasscheiben, um die VIG-Einheit (200) bereitzustellen.

2. Verfahren zum Bereitstellen eines Randverbunds nach Anspruch 1, wobei die erste Glasscheibe (1a) und die zweite Glasscheibe (1b) zusammengelegt werden, bevor das erwärmte, erweichte Glasfrittenpulvermaterial (5) aufgebracht wird.

3. Verfahren zum Bereitstellen eines Randverbunds (2) nach Anspruch 1, wobei die erste Glasscheibe (1a) und die zweite Glasscheibe (1b) zusammengelegt werden, nachdem das erwärmte, erweichte Glasfrittenpulvermaterial aufgebracht wird.

4. Verfahren zum Bereitstellen eines Randverbunds (2) nach einem der vorhergehenden Ansprüche, wobei das Wiedererwärmen des aufgebrachten Glasfrittenpulvermaterials (5) unter Verwendung mindestens einer Wärmequelle (28, 26) in der Vakuumkammer (22) vorgenommen wird.

5. Verfahren zum Bereitstellen eines Randverbunds (2) nach einem der vorhergehenden Ansprüche, wobei die erste Glasscheibe (1a) und die zweite Glasscheibe (1b) durch thermisches Vorspannen, eine Plasmaquelle, eine Ionenquelle oder chemisch verstärkt wurden.

6. Verfahren zum Bereitstellen eines Randverbunds (2) nach einem der vorhergehenden Ansprüche, wobei die Temperatur der Glasscheiben (1a, 1b) in der Vakuumkammer (22) während des Evakuierungsschritts zwischen 200-400 Grad Celsius liegt.

7. Verfahren zum Bereitstellen eines Randverbunds (2) nach einem der vorhergehenden Ansprüche, wobei die Wärmequelle (26) eine Nahinfrarot- oder eine Infrarot-Lichtquelle umfasst, wobei die Nahinfrarot- oder Infrarot-Lichtquelle Folgendes ist:
∘ ein Dauerstrichlaser oder ein Pulslaser (26), wobei der Dauerstrichlaser oder Pulslaser Licht im Nahinfrarot- oder Infrarot-Wellenlängenbereich abgibt,
∘ oder eine Infrarotlampe (28), wie etwa eine Infrarot-Quarzlampe.

8. Verfahren zum Bereitstellen eines Randverbunds nach Anspruch 7, wobei das aufgebrachte Glasfrittenpulvermaterial eine Breite W_{FPM} aufweist und wobei an der Position, an der das Glasfrittenpulvermaterial mit dem Laserlicht bestrahlt wird, das Licht eine Punktgröße aufweist, die mindestens 10 % größer als die Breite W_{FPM} des Glasfrittenmaterials ist.

9. Verfahren zum Bereitstellen eines Randverbunds nach einem der vorhergehenden Ansprüche, ferner umfassend Erwärmen mindestens der Umfangskante der ersten Glasscheibe (1a) und/oder der zweiten Glasscheibe (1b) auf eine Glasscheibentemperatur (T_{glass-sheet}), bevor das erwärmte, erweichte Glasfrittenpulvermaterial auf die erste Glasscheibe und/oder die zweite Glasscheibe aufgebracht wird, wobei die Glasscheibentemperatur (T_{glass-sheet}) niedriger als die Erweichungstemperatur (T_{frit-powder}) ist.

10. Verfahren zum Bereitstellen eines Randverbunds nach einem der vorhergehenden Ansprüche, wobei die Erweichungstemperatur (T_{frit-powder}) über 300 °C, wie etwa zwischen 350 °C und 550 °C, wie etwa zwischen 385 °C und 460 °C, liegt und wobei das Glasfrittenpulvermaterial (5) mit im Wesentlichen dieser Temperatur aufgebracht wird.

11. Verfahren zum Bereitstellen eines Randverbunds nach einem der vorhergehenden Ansprüche, wobei das Glasfrittenpulvermaterial mindestens ein Oxid umfasst, das ausgewählt ist aus Vanadiumoxid, Bariumoxid, Zinkoxid, Bismutoxid, Aluminiumoxid, Siliziumoxid, Magnesiumoxid, Chromoxid, Eisenoxid, Cobaltoxid, Natriumoxid, Manganoxid, Tantaloxid, Molybdänoxid, Nioboxid, Telluroxid oder beliebigen Kombinationen aus einem oder mehreren davon.

12. Verfahren zum Bereitstellen eines Randverbunds nach einem der vorhergehenden Ansprüche, wobei das Glasfrittenpulvermaterial weniger als 1 Gew.-% Bindemittel und/oder weniger als 1 Gew.-% Lösungsmittel umfasst.

13. Verfahren zum Bereitstellen eines Randverbunds nach einem der vorhergehenden Ansprüche, wobei eine Klemmanordnung (40), wie etwa eine oder mehrere Klemmen (44) oder ein oder mehrere Stellantriebe, eine Druckkraft (F) auf das Randverbundmaterial (2) während und/oder nach dem Wiedererwärmen des aufgebrachten Glasfrittenpulvermaterials bereitstellt.

14. Verfahren zum Bereitstellen eines Randverbunds nach einem der vorhergehenden Ansprüche, wobei eine erste Erwärmungsanordnung (28), wie etwa eine oder mehrere Infrarot-Lichtquellen, ein Vorerwärmen der Glasscheiben (1a, 1b) bereitstellt, wie etwa wobei eine zweite Wärmequelle (26) das Wiedererwärmen des aufgebrachten Glasfrittenpulvermaterials bereitstellt, während das Vorerwärmen bereitgestellt wird.

15. Verfahren zum Bereitstellen eines Randverbunds nach einem der vorhergehenden Ansprüche, wobei das Wiedererwärmen des aufgebrachten Glasfrittenpulvermaterials zumindest teilweise das aufgebrachte Glasfrittenpulvermaterial wieder erweicht, wie etwa so, dass das aufgebrachte Glasfrittenpulvermaterial zumindest teilweise schmilzt.

## Revendications

1. Procédé de réalisation d'un scellement de bord (2) lors de la fabrication d'une unité de verre isolé sous vide, VIG, (200) comprenant des feuilles de verre appariées (1a, 1b) séparées par des structures de support (20) maintenant un espace entre lesdites feuilles de verre appariées (1a, 1b), le procédé comprenant les étapes consistant à :
• fournir une première feuille de verre (1a) et une seconde feuille de verre (1b),
• chauffer un matériau en poudre de fritte de verre (5) à une température de ramollissement (T_{fritte-poudre}) pour ramollir le matériau en poudre de fritte de verre,
• appliquer le matériau en poudre de fritte de verre chauffé et ramolli (5) sur la première feuille de verre (1a) et/ou la seconde feuille de verre (1b), la première feuille de verre (1a) et la seconde feuille de verre (1b) étant appariées avant ou après l'application du matériau en poudre de fritte de verre chauffé et ramolli,
• réchauffer le matériau en poudre de fritte de verre appliqué en utilisant au moins une source de chaleur (28, 26) ;
• évacuer l'espace (13) entre les feuilles de verre appariées (1a, 1b) dans une chambre à vide (22) et
• sceller les feuilles de verre appariées pour fournir l'unité VIG (200).

2. Procédé de réalisation d'un scellement de bord selon la revendication 1, dans lequel la première feuille de verre (1a) et la seconde feuille de verre (1b) sont appariées avant l'application du matériau en poudre de fritte de verre ramolli et chauffé (5).

3. Procédé de réalisation d'un scellement de bord (2) selon la revendication 1, dans lequel la première feuille de verre (1a) et la seconde feuille de verre (1b) sont appariées après l'application du matériau en poudre de fritte de verre chauffé et ramolli.

4. Procédé de réalisation d'un scellement de bord (2) selon l'une quelconque des revendications précédentes, dans lequel le réchauffage du matériau en poudre de fritte de verre appliqué (5) à l'aide d'au moins une source de chaleur (28, 26) est effectué dans la chambre à vide (22).

5. Procédé de réalisation d'un scellement de bord (2) selon l'une quelconque des revendications précédentes, dans lequel la première feuille de verre (1a) et la seconde feuille de verre (1b) ont été renforcées par trempe thermique, une source de plasma, une source d'ions ou renforcées chimiquement.

6. Procédé de réalisation d'un scellement de bord (2) selon l'une quelconque des revendications précédentes, dans lequel la température des feuilles de verre (1a, 1b) dans la chambre à vide (22) pendant l'étape d'évacuation est comprise entre 200 et 400 degrés Celsius.

7. Procédé de réalisation d'un de scellement de bord (2) selon l'une quelconque des revendications précédentes, dans lequel la source de chaleur (26) comprend une source de lumière proche infrarouge ou infrarouge, ladite source de lumière proche infrarouge ou infrarouge étant :
∘ un laser à onde continue ou un laser pulsé (26), dans lequel le laser à onde continue ou un laser pulsé émet de la lumière dans la plage de longueurs d'onde proche infrarouge ou infrarouge,
∘ ou une lampe infrarouge (28), telle qu'une lampe à quartz infrarouge.

8. Procédé de réalisation d'un scellement de bord selon la revendication 7, dans lequel le matériau en poudre de fritte de verre appliqué a une largeur W_{FPM} et dans lequel, à l'endroit où la lumière laser irradie le matériau en poudre de fritte de verre, la lumière a une taille de point qui est au moins 10 % plus grande que la largeur W_{FPM} du matériau en poudre de fritte de verre.

9. Procédé de réalisation d'un scellement de bord selon l'une quelconque des revendications précédentes, comprenant en outre le chauffage d'au moins le bord périphérique de la première feuille de verre (1a) et/ou de la seconde feuille de verre (1b) à une température de feuille de verre (T_{feuille de verre}) avant l'application du matériau de poudre de fritte de verre ramolli et chauffé sur la première feuille de verre et/ou la seconde feuille de verre, la température de la feuille de verre (T_{feuille de verre}) étant inférieure à la température de ramollissement (T_{fritte-poudre}).

10. Procédé de réalisation d'un scellement de bord selon l'une quelconque des revendications précédentes, dans lequel la température de ramollissement (T_{fritte-poudre}) est supérieure à 300°C, par exemple entre 350°C et 550°C, par exemple entre 385°C et 460°C, et dans lequel le matériau en poudre de fritte de verre (5) est appliqué sensiblement à cette température.

11. Procédé de réalisation d'un scellement de bord selon l'une quelconque des revendications précédentes, dans lequel le matériau en poudre de fritte de verre comprend au moins un oxyde choisi parmi l'oxyde de vanadium, l'oxyde de baryum, l'oxyde de zinc, l'oxyde de bismuth, l'oxyde d'aluminium, l'oxyde de silicium, l'oxyde de magnésium, l'oxyde de chrome, l'oxyde de fer, l'oxyde de cobalt, l'oxyde de sodium, l'oxyde de manganèse, l'oxyde de tantale, l'oxyde de molybdène, l'oxyde de niobium, l'oxyde de tellure, ou toute combinaison d'un ou plusieurs de ceux-ci.

12. Procédé de réalisation d'un scellement de bord selon l'une quelconque des revendications précédentes, dans lequel le matériau en poudre de fritte de verre comprend moins de 1 % en poids de liant et/ou moins de 1 % en poids de solvant.

13. Procédé de réalisation d'un scellement de bord selon l'une quelconque des revendications précédentes, dans lequel un agencement de serrage (40), tel qu'une ou plusieurs pinces (44) ou actionneurs, fournit une force de compression (F) au matériau de scellement de bord (2) pendant et/ou après ledit réchauffage du matériau en poudre de fritte de verre appliqué.

14. Procédé de réalisation d'un scellement de bord selon l'une quelconque des revendications précédentes, dans lequel un premier dispositif de chauffage (28), tel qu'une ou plusieurs sources de lumière infrarouge, assure un préchauffage des feuilles de verre (1a, 1b), tel que dans lequel une seconde source de chaleur (26) assure ledit réchauffage du matériau en poudre de fritte de verre appliqué pendant que ledit préchauffage est assuré.

15. Procédé de réalisation d'un scellement de bord selon l'une quelconque des revendications précédentes, dans lequel ledit réchauffage du matériau en poudre de fritte de verre appliqué ramollit au moins partiellement le matériau en poudre de fritte de verre appliqué, de telle sorte que le matériau en poudre de fritte de verre appliqué fond au moins partiellement.
